# EUROPEAN PATENT APPLICATION

(11) **EP 1 202 536 A1**
(43) Date of publication of application: **02.05.2002**
(21) Application number: 00123672.8
(22) Date of filing: 30.10.2000
(51) Int. Cl.: H04M 1/57

(54) **Communication terminal and method for identification and signaling of calling subscriber data**

(71) Applicant: SIEMENS AKTIENGESELLSCHAFT, 80333 München (DE)
(72) Inventor: Kaup, Andre, Dr., 85635 Hoehenkrichen (DE)

(57) **Abstract**

With the present invention a simplification of the identification of a calling subscriber within a communications system is achieved by associating a picture or a short video sequence with each caller and outputting this picture or the associated video scene on the display to the person being called, for identification instead of outputting call numbers. In order to minimize complexity, the picture data can previously be coded using a suitable compression method. One idea of the invention is to use improved output capabilities of future multimedia compatible communications terminals for a new, more convenient way of identifying the calling subscriber.

## Description

The present invention relates to a communications terminal and a method for identification and for signaling of received data of a calling subscriber within a communications system, wherein a communications address associated with said calling subscriber can be received and analyzed, whereas data for signaling associated with said communications address can be displayed.

In previous communications systems, various ways were used to inform the subscriber of the identity of the caller. A first precondition is that the calling subscriber can in principle be identified at the receiver. In the ISDN network and GSM or UMTS, this is done by transmitting the call number or some other identification number for the subscriber to the receiver. The receiving equipment can then provide the receiver with information about the identity of the caller by outputting the caller's call number on a numerical display.

Modern GSM or UMTS terminals in particular furthermore also offer the option of comparing this call number with an address book stored in the terminal. The caller's number can thus be associated with the name, and on an alphanumeric display can be output. The user thus has added value, since names can be identified more easily than call numbers.

Many terminals, in particular mobile telephones, already have considerably better output options than simple alphanumeric displays, however. Thus, in addition to text, pictures, and in the near future video sequences as well, can in principle be displayed on a terminal.

The invention application deals with the question of how it is possible to signal to the subscriber being called in a communications system which call partner would like to contact him in a simple and more convenient way.

An object of the present invention is to provide a communications terminal and a corresponding method for identification and for signaling of received data of a calling subscriber within a communications system. This problem is in this case intended to be solved paying particular attention to future multimedia compatible communications terminals, in a manner which is as intuitive as possible for the user, and with as little technical complexity as possible at the same time.

The aforementioned object is achieved according to the present invention with a communications terminal comprising means for identification and for signaling of received data of a calling subscriber within a communications system, wherein a communications address associated with said calling subscriber can be received and analyzed, whereas data for signaling associated with said communications address can be displayed, with the additional feature that said data for signaling comprises picture information associated with said calling subscriber.

In a first advantageous embodiment of the communications terminal according to the present invention it further comprises an address database, wherein said picture information associated with said calling subscriber is stored. Said picture information in the address database can then be referenced using the received communications address associated with said calling subscriber. As a result, the invention can be realized in a very effective and inexpensive way.

Under these conditions it has turned out to be especially advantageous if said picture information is stored within a communications network, especially within the Internet, in a memory associated with said calling subscriber, from where said picture information can be transferred to and can be stored into said address database of said communications terminal. As a result, the distribution of the picture information needed is guaranteed.

In another advantageous embodiment of the communications terminal according to the present invention said picture information is stored within a communications network, especially within the Internet, in a memory associated with said calling subscriber. This memory serves as a remote database for said communications terminal, whereas said picture information in the remote database can be referenced after having received and analyzed the communications address associated with said calling subscriber. Thus, no local address database within the communications terminal is needed and therefore the costs for a realization are decreased.

In an alternative advantageous embodiment of the communications terminal according to the present invention it further comprises a memory for storing a communications address associated with said communications terminal and for storing associated picture information, which both can be transmitted to other communications terminals within a communications network. As a result, the invention can be realized in a very effective and inexpensive way without any databases for storing and for looking up picture information.

Furthermore, it has turned out to be especially advantageous if said picture information comprises a picture of a calling subscriber, especially a photograph of the face or a portrait.

Under these conditions it has turned out to be advantageous if said picture information comprises a short video sequence, especially one showing a calling subscriber.

In order to keep the amount of memory for storing such picture data small, said picture information can be stored in coded form using suitable compression standards.

The communications terminal according to the present invention is especially valuable if it forms part of an ISDN communications network or a GSM or UMTS communications network, in particular if it is a mobile telephone.

To implement a communications network making use of the aforementioned communications terminal in a simple and efficient manner, the object of this invention is also achieved by a method for identification and signaling of a first subscriber in a communications system to a second subscriber being called by the first subscriber having the following procedural steps:
- receiving a communications address associated with said calling subscriber,
- analyzing said communications address and
- displaying of picture information associated with said communications address of said calling subscriber.

A first advantageous embodiment of the method according to the present invention further comprises the following procedural steps:
- referencing said picture information being stored in an address database by
- using the received communications address associated with said calling subscriber.
As a result, an appropriate way of referencing picture information associated with an oncoming communications address can be taken due to an especially simple way of signaling picture information.

If said picture information is stored within a communications network, especially within the Internet, in a memory associated with said calling subscriber, the method according to this invention can be further improved by the following steps:
- transferring said picture information associated with the calling subscriber to the subscriber being called and
- storing said picture information into said address database of the subscriber being called.
Under these conditions the distribution of the picture information needed can be realized.

In another advantageous embodiment of the method according to the present invention no local address database within the communications terminal is needed and therefore the costs for a realization are decreased. This is accomplished, if said picture information again is stored within a communications network, especially within the Internet, in a memory associated with said calling subscriber, and if the following steps are performed:
- said memory serving as a remote database for the subscriber being called and
- referencing said picture information in the remote database after having received and analyzed the communications address associated with the calling subscriber.

In an alternative embodiment of the method according to the present invention this invention can be realized in a very effective and inexpensive way without any databases for storing and for looking up picture information. This is achieved by the following further steps:
- storing a communications address associated with a subscriber of the communications system,
- storing associated picture information and
- transmitting both information to other subscribers within the communications system together with the associated communications address of the calling subscriber.

An important aspect of the present invention is the simplification of the identification of a calling subscriber within a communications system by outputting a picture of the subscriber instead of outputting call numbers, with the picture data having previously been coded using a suitable compression method, in order to minimize complexity.

Thus, one idea of the invention is to use improved output capabilities of future multimedia compatible communications terminals for a new, more convenient way of identifying the calling subscriber. To do this, it is proposed to associate a picture or a short video sequence with each caller and to display this picture or the associated video scene on the display to the person being called, for identification.

Further advantages and details of the present invention are described in the following preferred embodiments together with the drawings. In the drawings, similar elements with the same function are designated with the same reference characters, but similar elements need not necessarily be the same.

FIG 1 shows a block schematic of a technical implementation of a communications terminal according to this invention with an address database for referencing locally stored picture information.

FIG 2 shows a block schematic of a technical implementation with an remote address database for referencing picture information.

FIG 3 shows a block schematic of a technical implementation for displaying picture information wherein this picture information can be transmitted and received together with a communications address of a calling subscriber.

To associate a picture or a short video sequence with each caller and to display this picture or the associated video scene on the display to the person being called, for identification, there are at least the following options for a specific implementation.

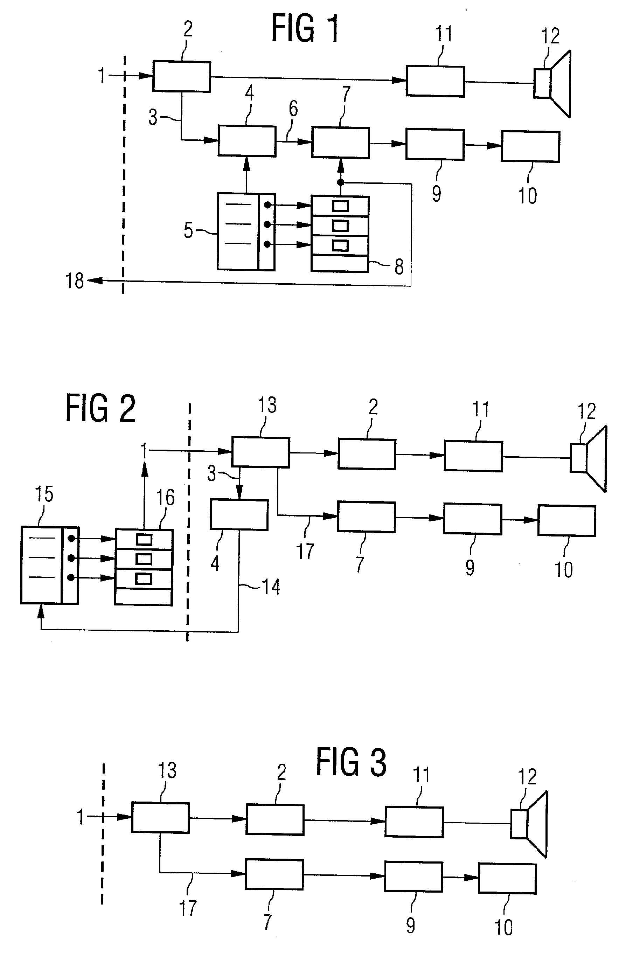

In FIG 1 a block schematic of a technical implementation of a communications terminal according to this invention is shown with an address database for referencing locally stored picture information. An input signal 1 is being analyzed by a device 2 for supervision. This device 2 filters input information and recognizes communication address information 3 within the input data being received. When the device 2 recognizes an oncoming call of another communications subscriber, a tone generator 11 is triggered that controls a loudspeaker 12 for acoustic signaling.

After having filtered a communications address 3 this signal 3 is passed to a device 4 for referencing 6 data from an address database 5. The picture or video information for each subscriber is stored locally in an address book memory 8, in an analogous manner to the name information, in the terminal of the subscriber being called.

If a communications address 3 like the telephone number of the caller is transmitted to the terminal being called, then the associated picture information in the address database can be referenced, and can be shown on a display 10. Therefore the picture information is read from the memory 8 using an index pointer 6 for referencing the picture information associated with the telephone number of the caller being stored in the address book 5.

In order to keep the amount of memory 8 for storing such picture data small, it is proposed that the picture data be stored in coded form using suitable compression standards. In this case, the JPEG or JPEG2000 Standard is suitable for still pictures of the subscribers, for example photographs of the face or portraits. Video clips, that is to say short video sequences of the calling subscriber, can expediently be stored as MPEG-4 files. In this case, information from the picture data memory 8 is passed to a decoder 7 for decompression. The decompressed picture data is then stored in another picture memory 9 for the purpose of displaying the content of this memory 9 on the display 10.

For actualization of the address database 5, 8 the picture data can be distributed, for example, electronically via homepages of subscribers or homepages of network or service providers using the Internet. It is also conceivable that public telephone directories will be in multimedia form in the future and will already include short picture or video data for each subscriber. These can then once again be matched electronically, and can be loaded into the terminal.

FIG 2 shows a block schematic of a technical implementation with an remote address database for referencing picture information. The main difference between the embodiment of FIG 2 and that of FIG 1 is that the address database is not part of the communications terminal, but it is part of the communications network, e.g. the Internet.

The communications network comprises a memory 16 associated with the communications address of the calling subscriber, which serves as a remote database 15, 16 for the communications terminal being called. For example, this remote database is a public telephone directory in multimedia form.

The picture information stored in the remote database 15, 16 can be referenced using an index pointer 14 which is transmitted by the device 4 of the communications terminal being called after having received and analyzed the communications address 3 associated with the calling subscriber.

The picture information intended to be displayed on the display 10 of the communications terminal being called is then transmitted from the memory 16 via the input data 1. Such input data 1 is analyzed using a de-multiplexing unit 13 from which is derived a signal 17 containing the picture data which is then passed to the decoder 7 where the picture data is processed as described above. This embodiment has, among others, the advantage of a reduced amount of devices within the communications terminal being a mass product. Therefore the cost of production can be reduced.

In present-day systems, only the call number of the calling subscriber is signaled to the receiver. However, with the present invention, it is also possible to pass picture information directly to the receiver, in addition to the call number or an identification number.

FIG 3 shows a block schematic of such a technical implementation for displaying picture information wherein this picture information can be transmitted and received together with a communications address of a calling subscriber.

The advantage of this solution is that the receiver can display the caller as a picture or video clip on the terminal display, even without any prior knowledge of the picture data in the form of an address book. To do this, the picture information is attached as additional information to the signaling data stream - for example within ISDN, GSM or UMTS - with a compressed transmission form expediently also being chosen in this case. JPEG or JPEG2000 Standards already mentioned above are suitable for compression of still pictures, and MPEG-4 is suitable for video data. The picture data for this signaling data stream, for example, can be derived from the output signal 18 of the address memory 8 within a communications terminal according to the invention as shown in FIG 1. In this case, the communications terminal does not need to have an address database, but only a memory containing the picture information associated with this communications terminal, respectively with the associated communications address.

In a communications terminal being called such input data 1 is analyzed using a de-multiplexing unit 13 from which is derived a signal 17 containing the picture data which is then passed to the decoder 7 for decompression purposes. Other data than picture information is passed to the device 2 for filtering and is processed in the way described above with regard to acoustic signaling.

This embodiment, too, is advantageous in comparison with the embodiment shown in FIG 1 because of a reduced amount of devices within the communications terminal.

The above description of preferred embodiments of the present invention is given for the purpose of illustration, but is not exhaustive. Nor is the present invention limited to the precise form described here, but instead numerous modifications and changes are also possible within the context of the above disclosure.

Preferred embodiments have been described to illustrate the basic details of the present invention and practical applications to enable those skilled in the art to implement this invention. Numerous additional modifications may be implemented for special applications.

## Claims

1. A communications terminal comprising means for identification (2) and for signaling (10, 11, 12) of received data (1) of a calling subscriber within a communications system, wherein a communications address (3) associated with the calling subscriber can be received (1, 2) and analyzed (4, 13), and wherein data for signaling (9) associated with the communications address (3) can be displayed (10),
**characterised in that**
said data for signaling comprise picture information (8, 9) associated with said calling subscriber.

2. The communications terminal according to claim 1,
**characterised in that**
it further comprises an address database (5, 8), wherein said picture information associated with said calling subscriber is stored (8), whereas said picture information in the address database (5, 8) can be referenced (6) using the received communications address (3) associated with said calling subscriber.

3. The communications terminal according to claim 2,
**characterised in that**
said picture information (8) is stored within a communications network, especially within the Internet, in a memory (16) associated with said calling subscriber, from where said picture information can be transferred (1) to and can be stored (8) into said address database (5, 8) of said communications terminal.

4. The communications terminal according to claim 1,
**characterised in that**
said picture information is stored within a communications network, especially within the Internet, in a memory (16) associated with said calling subscriber, which serves as a remote database (15, 16) for said communications terminal, whereas said picture information in the remote database (15, 16) can be referenced (14) after having received (1, 2) and analyzed (4) the communications address (3) associated with said calling subscriber.

5. The communications terminal according to claim 1,
**characterised in that**
said communications terminal further comprises a memory (8) for storing a communications address associated with said communications terminal and for storing associated picture information, which both can be transmitted (18) to other communications terminals within a communications network.

6. The communications terminal according to one of the preceding claims,
**characterised in that**
said picture information (8, 9) comprises a picture of a calling subscriber, especially a photograph of the face or a portrait.

7. The communications terminal according to one of the preceding claims,
**characterised in that**
said picture information (8, 9) comprises a short video sequence, especially one showing a calling subscriber.

8. The communications terminal according to one of the preceding claims,
**characterised in that**
said picture information (8, 9) is stored in coded form using suitable compression standards (7).

9. The communications terminal according to one of the preceding claims, which forms part of an ISDN communications network or a GSM or UMTS communications network, in particular a mobile telephone.

10. A method of identifying (2) and signaling (10, 11, 12) a first subscriber in a communications system to a second subscriber being called by the first subscriber, which comprises the following method steps:
- receiving (1, 2) a communications address (3) associated with the calling subscriber,
- analyzing (4, 13) the communications address (3) and
- displaying (10) picture information (8, 9) associated with the communications address (3) of the calling subscriber.

11. The method according to claim 10, having the further procedural steps:
- referencing (6) the picture information being stored (8) in an address database (5) by
- using the received communications address (3) associated with the calling subscriber.

12. The method according to claim 11, whereas the picture information (8, 9) is stored within a communications network, especially within the Internet, in a memory (16) associated with the calling subscriber, having the further steps:
- transferring (1, 17) the picture information associated with the calling subscriber to the subscriber being called and
- storing (8) the picture information into the address database (5, 8) of the subscriber being called.

13. The method according to claim 10, whereas the picture information is stored within a communications network, especially within the Internet, in a memory (16) associated with the calling subscriber, having the further steps:
- the memory (16) serving as a remote database (15, 16) for the subscriber being called and
- referencing (14) the picture information (9) in the remote database (15, 16) after having received (1, 2) and analyzed (4) the communications address (3) associated with the calling subscriber.

14. The method according to claim 10, having the further procedural steps:
- storing (8) a communications address associated with a subscriber of the communications system,
- storing (8) associated picture information (9) and
- transmitting (18) both information to other subscribers within the communications system together with the associated communications address of the calling subscriber.
